# EUROPÄISCHE PATENTSCHRIFT

(11) **EP 2 788 612 B1**
(45) Veröffentlichungstag und Bekanntmachung des Hinweises auf die Patenterteilung: **12.04.2017**
(21) Anmeldenummer: 12799182.6
(22) Anmeldetag: 10.12.2012
(51) Int. Cl.: B01D 35/00, B01D 29/21, B01D 36/00, F02M 37/22, B01D 29/58

(54) **KRAFTSTOFFFILTER EINER BRENNKRAFTMASCHINE UND FILTERELEMENT EINES KRAFTSTOFFFILTERS**
FUEL FILTER OF AN INTERNAL COMBUSTION ENGINE AND FILTER ELEMENT OF A FUEL FILTER
FILTRE À CARBURANT D'UN MOTEUR À COMBUSTION INTERNE ET ÉLÉMENT FILTRANT D'UN FILTRE À CARBURANT

(30) Priorität: 09.12.2011 DE 102011120641
(43) Veröffentlichungstag der Anmeldung: 15.10.2014
(73) Patentinhaber: Mann + Hummel GmbH, 71638 Ludwigsburg (DE)
(72) Erfinder: DÜRR, Elke, 71679 Asperg (DE); VEIT, Martin, 71116 Gärtringen (DE); EICHINGER, Stefan, 70839 Gerlingen (DE); KLEIN, Martin, 71634 Ludwigsburg (DE)
(86) Internationale Anmeldenummer: PCT/EP2012/074969
(87) Internationale Veröffentlichungsnummer: WO 2013/083843

(56) Entgegenhaltungen:
- WO-A2-2007/041559
- FR-A- 1 466 065
- US-A- 3 228 527
- US-A- 4 372 847
- US-A1- 2006 277 877
- US-A1- 2007 062 886

## Beschreibung

### Technisches Gebiet

Die Erfindung betrifft einen Kraftstofffilter für Kraftstoff, insbesondere Dieselkraftstoff, einer Brennkraftmaschine insbesondere eines Kraftfahrzeugs, mit einem Gehäuse, welches wenigstens einen Kraftstoffeinlass für zu reinigenden Kraftstoff, wenigstens einen Kraftstoffauslass für gereinigten Kraftstoff und wenigstens einen Wasserauslass für vom Kraftstoff abgeschiedenes Wasser aufweist und in dem ein Filterelement angeordnet ist, das den Kraftstoffeinlass dicht von dem Kraftstoffauslass trennt und das ein als Hohlkörper ausgestaltetes Filtermedium aufweist, das zur Filtrierung des Kraftstoffs von innen nach außen oder von außen nach innen durchströmbar ist.

Ferner betrifft die Erfindung ein Filterelement eines Kraftstofffilters für Kraftstoff, insbesondere Dieselkraftstoff, einer Brennkraftmaschine insbesondere eines Kraftfahrzeugs, das in einem Gehäuse des Kraftstofffilters so angeordnet werden kann, dass es einen Kraftstoffeinlass des Gehäuses dicht von einem Kraftstoffauslass trennt, und das ein als Hohlkörper ausgestaltetes Filtermedium aufweist, das zur Filtrierung des Kraftstoffs von innen nach außen oder von außen nach innen durchströmbar ist.

### Stand der Technik

Aus der EP 1 233 173 A2 ist ein Flüssigkeitsfilter für Kraftstoffe bekannt, wie er zum Reinigen von Dieselkraftstoff verwendet wird. Der Flüssigkeitsfilter weist ein Filtergehäuse mit einem Zulaufanschluss für zu reinigenden Dieselkraftstoff und einem Ablaufanschluss für gereinigten Dieselkraftstoff auf. Ferner weist der Flüssigkeitsfilter ein Mittelrohr auf, welches zum Entfernen von Wasser, das vom Dieselkraftstoff abgeschieden wurde, verwendet wird. In dem Innenraum des Gehäuses ist ein Filterelement so angeordnet, dass es zwischen den Zulaufanschluss und den Ablaufanschluss geschaltet ist. Das Filterelement weist einen radial von außen nach innen durchströmten Sterneinsatz auf. Im oberen Bereich des Innenraums des Sterneinsatzes ist ein Trenneinsatz angeordnet, der eine kegelige Form aufweist. Dieser Trenneinsatz besteht vorzugsweise aus einem wasserabweisenden Material, um die Wasserabscheidung auf der Reinseite des Sterneinsatzes zu verbessern. Der zu reinigende Dieselkraftstoff strömt über den Zulaufanschluss auf die Schmutzseite im Filtergehäuse. Von dort strömt er radial von außen nach innen durch den Sterneinsatz und gelangt gereinigt auf die Reinseite. Auf die Reinseite dabei gelangende Wasserteilchen sinken im Innenraum des Sterneinsatzes infolge ihres größeren spezifischen Gewichts nach unten und gelangen in einen Wasserspeicherraum, wo sich das ausgeschiedene Wasser sammelt. Der im Innenraum des Sterneinsatzes nach oben abströmende, gereinigte Dieselkraftstoff durchströmt den Trenneinsatz, der durch sein wasserabweisendes Material die Wasserabscheidung wesentlich unterstützt. Stromabwärts des Trenneinsatzes gelangt der Dieselkraftstoff über den Ablaufanschluss aus dem Filtergehäuse heraus.

Ferner ist aus WO 2007/041559 A2 ein Kraftstofffilter bekannt, der sowohl eine Partikelabscheidung als auch eine Wasserabscheidung beinhaltet. Hierzu hat der Filter ein Filtervlies sowie ein Koaleszenzmedium, das aus Fasern besteht, deren Durchmesser in Strömungsrichtung zunimmt. Zusätzlich ist dort eine hydrophobe Wasserbarriere vorgesehen, die beabstandet von dem Koaleszenzmedium stromabwärts des Koaleszers angeordnet ist.

Darüber hinaus beschreibt die US 2007/0062886 A1 ein Koaleszenzmedium, das sich dadurch auszeichnet, dass die Hauptorientierung der Fasern quer zu einer Hauptströmungsrichtung für das abgeschiedene Wasser stromabwärts des Koaleszenzmediums und quer zu einer Hauptströmungsrichtung für den Kraftstoff durch das Koaleszenzmedium verläuft.

Schließlich sind weitere Kraftstofffilter mit Wasserabscheidung aus den US 4 372 847 A, US 3 228 527 A, US 2006/0277877 A1 und FR 1 466 065 A bekannt.

Der Erfindung liegt die Aufgabe zugrunde, einen Kraftstofffilter und ein Filterelement eines Kraftstofffilters der eingangs genannten Art zu gestalten, bei dem die Filtrierung von Partikeln aus dem Kraftstoff und die Abscheidung von im Kraftstoff enthaltenem Wasser weiter verbessert wird.

### Offenbarung der Erfindung

Diese Aufgabe wird erfindungsgemäß durch einen Kraftstofffilter gemäß unabhängigem Anspruch 1 gelöst.

Insbesondere wird eine sich aufgrund des Fertigungsprozesses ergebene Hauptorientierung der Fasern der Vlieslage genutzt. Beispielsweise werden die Fasern, z. B. Endlosfasern oder Stapelfasern, entlang einer Ablagerichtung auf eine Ablage abgelegt. Beispielsweise wird die Ablagerichtung bei der Ablage auf ein Band durch die Laufrichtung des Bandes definiert. Bei dem Ablegeprozess orientieren sich die Fasern bevorzugt entlang der Ablagerichtung, wodurch sich eine Hauptorientierung der Faser im so hergestellten Vlies parallel zur Ablagerichtung ergibt.

Eine Hauptorientierung von Fasern einer Vlieslage liegt nicht erst dann vor, wenn sämtliche Fasern parallel verlaufen. Insbesondere liegt bereits eine Hauptorientierung von Fasern einer Vlieslage vor, wenn die Verlaufsrichtung von über 50 % der Fasern einen Winkel kleiner als 45° zu einer Richtung aufweisen, die dann die Hauptorientierung darstellt, vorzugsweise über 80 % der Fasern, weiter vorzugsweise über 90 % der Fasern. Die Orientierung der Fasern kann optisch begutachtet werden. Eine Quantifizierung kann durch eine Auswertung von Aufnahmen eines Lichtmikroskops oder eine Rasterelektronenmikroskops erfolgen. Besonders bevorzugt ist die Auswertung von microtomographischen Untersuchungen mittels Röntgen-Computer-Tomographie zur Bestimmung der 3D-Struktur von Vliesen und daraus die Bestimmung und Quantifizierung der Hauptorientierung der Fasern.

Erfindungsgemäß ist das Filterelement mehrstufig. Mit dem Filtermedium werden insbesondere Partikel, welche den Kraftstoff verunreinigen, herausgefiltert. An dem Koaleszenzmedium werden anschließend auch kleinste Wassertröpfchen, welche im Kraftstoff enthalten sind, zu größeren Wassertropfen vereinigt. Dabei werden die feinen Wassertröpfchen an den Fasern der Vlieslage des Koaleszenzmediums zurückgehalten und vergrößert, bis sie von der Kraftstoffströmung wieder mitgerissen und aus dem Koaleszenzmedium ausgetragen werden. Die Hauptorientierung der Fasern der Vlieslage verläuft erfindungsgemäß quer zur Hauptströmungsrichtung des abgeschiedenen Wassers hinter dem Koaleszenzmedium. Die Hauptströmungsrichtung des Wassers hinter dem Koaleszenzmedium wird im Wesentlichen durch die Schwerkraft vorgegeben. Der Hauptströmungsweg des Wassers im Filterelement ist daher so vorgegeben, dass er im Einbauzustand des Filterelements im Wesentlichen räumlich vertikal verläuft. Die Vlieslage hat eine im Wesentlichen gleichmäßige Faserausrichtung. Die Hauptorientierung ist dabei die mittlere Orientierung der Fasern. Durch die Orientierung der Fasern bezüglich der Hauptströmungsrichtung des abgeschiedenen Wassers wird vermieden, dass die Wassertropfen insbesondere aufgrund der Schwerkraft an den Fasern entlang befördert werden und sich am Rand der Vlieslage sammeln. Eine Verweilzeit der Wassertropfen an den Fasern, insbesondere dort wo sie eingefangen werden, wird somit erhöht. Auf diese Weise konzentrieren sich separierte Wassertropfen an den Fasern und können so effizient mit weiteren, auch kleinsten Wassertröpfchen vereinigt werden. Durch die Strömungsführung am Koaleszenzmedium kann vorgegeben werden, inwieweit die Wassertropfen in dem Koaleszenzmedium und/oder dahinter separiert werden. Die Wassertropfen können stromabwärts des Koaleszenzmediums insbesondere in einem Ausfällspalt ausgefällt werden. Sie können aufgrund ihres spezifischen Gewichts nach unten sinken. Der Hauptströmungsweg des abgeschiedenen Wassers hinter dem Koaleszenzmedium ist in diesem Fall von oben nach unten, also vertikal. Die Hauptorientierung der Fasern der wenigstens einen Vlieslage kann vorteilhafterweise in Bezug auf die Einbaulage des Filterelements räumlich im Wesentlichen horizontal sein. Mit dem erfindungsgemäßen Kraftstofffilter können auch Kraftstoffe gereinigt werden, deren spezifisches Gewicht größer ist als Wasser, bei denen analog die Wassertropfen räumlich nach oben steigen. Zu diesem Zweck kann das Filterelement umgedreht angeordnet werden. Entsprechend können der Kraftstoffeinlass, der Kraftstoffauslass und der Wasserauslass entsprechend angeordnet sein. Vorteilhafterweise kann das Wasser insbesondere in einem Wassersammelraum gesammelt werden, welcher mit dem Wasserauslass verbunden ist. Der Hauptströmungsweg des abgeschiedenen Wassers hinter dem Koaleszenzmedium ist dann entsprechend von unten nach oben. Falls vorteilhafterweise vorgesehen ist, dass das Filtermedium radial von innen nach außen durchströmt wird, kann sich das Koaleszenzmedium bevorzugt außerhalb des Filtermediums befinden und dieses umgeben. Wenn alternativ vorgesehen ist, dass das Filtermedium radial von außen nach innen durchströmt wird, kann sich das Koaleszenzmedium bevorzugt in dem Innenraum des Filtermediums befinden. Die gleichmäßige Faserausrichtung hat darüber hinaus den Vorteil, dass die Vlieslage in Faserrichtung eine geringere Dehnbarkeit aufweist als quer zur Faserrichtung. Die Vlieslage kann so stabil auf ein entsprechendes Stützgerüst aufgespannt werden.

Die Hauptorientierung der Fasern der wenigstens einen Vlieslage verläuft dabei im Wesentlichen auch quer zu einem Hauptströmungsweg für den Kraftstoff durch das Koaleszenzmedium. Auf diese Weise wird vermieden, dass die am Koaleszenzmedium eingefangenen Wassertropfen durch die Kraftstoffströmung entlang der Fasern bewegt werden. Dies wirkt sich positiv auf die Verweilzeit der Wassertropfen an den Fasern und damit auf die Effizienz der Koaleszenz aus.

Darüber hinaus ist im Strömungsweg des Kraftstoffs hinter dem Koaleszenzmedium, dieses umgebend oder in dem von ihm begrenzten Innenraum, ein als Hohlkörper gestaltetes hydrophobes, kraftstoffdurchlässiges Trennmedium zur Abscheidung von im Kraftstoff enthaltenem Wasser angeordnet, derart, dass zwischen dem Koaleszenzmedium und dem Trennmedium ein Ausfällspalt für abgeschiedenes Wasser realisiert ist, der mit dem Wasserauslass des Gehäuses verbunden ist. An dem Trennmedium können Wassertropfen, welche im Kraftstoff enthalten sind, zurückgehalten werden. Auf diese Weise kann die Wasserabscheidung verbessert werden. Vorteilhafterweise begrenzt das Trennmedium den Ausfällspalt auf der dem Koaleszenzmedium gegenüberliegenden Seite. Die mit dem Koaleszenzmedium vereinigten großen Wassertropfen können im Strömungsweg des Kraftstoffs hinter dem Koaleszenzmedium in dem Ausfällspalt ausgefällt werden. Sie können abhängig vom spezifischen Gewicht des Kraftstoffs nach unten sinken oder nach oben steigen. Vorteilhafterweise kann das Trennmedium siebartig sein. Ein siebartiges, insbesondere gewebtes Trennmedium hat den Vorteil, dass die Wassertropfen an den Siebfasern gehalten werden und insbesondere nach unten abtropfen beziehungsweise nach oben steigen können. An einem siebartigen Trennmedium wird das Wasser optimal zurückgehalten. Die Maschenöffnungen eines siebartigen Gewebes können einfach und definiert vorgegeben werden. Es kann optimal durchlässig für den Kraftstoff ausgestaltet sein. Mit einer siebartigen Struktur kann einfach der Druckverlust am Trennmedium minimiert werden.

Ferner können vorteilhafterweise das Filtermedium, das Koaleszenzmedium und gegebenenfalls das Trennmedium koaxial angeordnet sein. Eine koaxiale Anordnung ist platzsparend. Ferner kann in einer koaxialen Anordnung ein Strömungsverlauf des Kraftstoffs von radial außen nach innen oder radial innen nach außen einfach optimiert werden. Die Grundfläche des Filtermediums, des Koaleszenzmediums und des Trennmediums können dabei ähnlich sein. Die Grundflächen können aber auch unterschiedlich sein. Sie können insbesondere rund, oval oder eckig sein.

Vorteilhafterweise kann das Filterelement ein Rundfilterelement sein. Rundfilterelemente können platzsparend aufgebaut werden. Mit Rundfilterelementen kann ein optimales Verhältnis von Filter-/Abscheidefläche zum Bauraum realisiert werden.

Ferner kann vorteilhafterweise das Gehäuse öffenbar sein und das Filterelement kann austauschbar im Gehäuse angeordnet sein. Das Filterelement kann so einfach zum Austausch oder zu Wartungszwecken aus dem Gehäuse entfernt werden.

Die Aufgabe wird erfindungsgemäß ferner durch das Filterelement dadurch gelöst, dass im Strömungsweg des Kraftstoffs hinter dem Filtermedium, dieses umgebend oder in dem von ihm begrenzten Innenraum, ein als Hohlkörper gestaltetes Koaleszenzmedium zur Abscheidung von im Kraftstoff enthaltenem Wasser angeordnet ist, das wenigstens eine Lage aus einem zur Koaleszenz von Wasser geeigneten Vlies umfasst, und eine Hauptorientierung von Fasern der wenigstens einen Vlieslage quer zu einem Hauptströmungsweg für das abzuscheidende Wasser stromabwärts des Koaleszenzmediums verläuft. Die Hauptorientierung der Fasern der wenigstens einen Vlieslage verläuft dabei im Wesentlichen auch quer zu einem Hauptströmungsweg für den Kraftstoff durch das Koaleszenzmedium. Darüber hinaus ist im Strömungsweg des Kraftstoffs hinter dem Koaleszenzmedium, dieses umgebend oder in dem von ihm begrenzten Innenraum, ein als Hohlkörper gestaltetes hydrophobes, kraftstoffdurchlässiges Trennmedium zur Abscheidung von im Kraftstoff enthaltenem Wasser angeordnet, derart, dass zwischen dem Koaleszenzmedium und dem Trennmedium ein Ausfällspalt für abgeschiedenes Wasser realisiert ist, der mit dem Wasserauslass des Gehäuses verbunden ist.

Die im Zusammenhang mit dem erfindungsgemäßen Kraftstofffilter aufgezählten Vorteile und Merkmale gelten für das erfindungsgemäße Filterelement entsprechend.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: einen Längsschnitt eines Kraftstofffilters mit einem austauschbaren, dreistufigen Filterelement, das ein Koaleszenzmedium mit im Wesentlichen horizontal ausgerichteten Fasern aufweist;
- Figur 2: einen horizontalen Schnitt eines Ausschnitts des Koaleszenzmediums auf der linken Seite in der Figur 1;
- Figur 3: einen Ausschnitt des Koaleszenzmediums aus der Figur 1 mit Blick auf eine Abströmseite;
- Figur 4: einen vertikalen Querschnitt eines Ausschnitts des Koaleszenzmediums auf der linken Seite in der Figur 1.

In den Figuren sind gleiche Bauteile mit gleichen Bezugszeichen versehen.

### Ausführungsform(en) der Erfindung

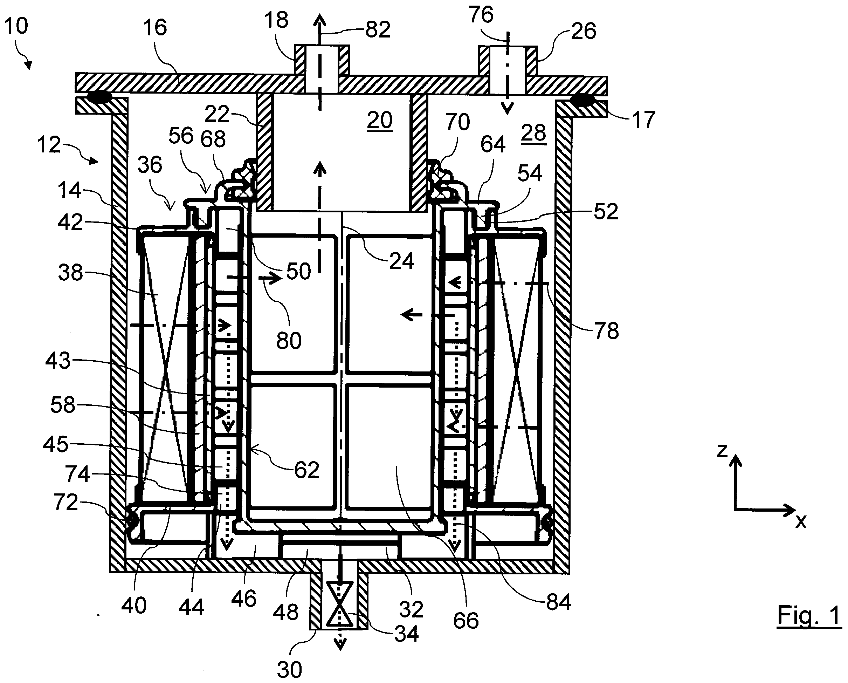

In der Figur 1 ist im Längsschnitt ein Kraftstofffilter 10 eines Kraftstoffsystems einer Brennkraftmaschine eines Kraftfahrzeugs gezeigt. Der Kraftstofffilter 10 dient zur Reinigung des für den Betrieb der Brennkraftmaschine verwendeten Kraftstoffs, beispielsweise Dieselkraftstoff. Ferner dient der Kraftstofffilter 10 zur Abscheidung von in dem Kraftstoff enthaltenem Wasser.

Der Kraftstofffilter 10 verfügt über ein zweiteiliges Gehäuse 12 mit einem becherförmigen Filtertopf 14 und einem Filterdeckel 16, der trennbar auf dem Filtertopf 14 angeordnet ist. Zwischen dem Filtertopf 14 und dem Filterdeckel 16 ist eine Ringdichtung 17 angeordnet.

In dem Deckel 16 ist etwa zentral ein Auslassstutzen 18 für den gereinigten Kraftstoff angeordnet, welcher außerhalb des Gehäuses 12 mit einer in der Figur 1 nicht gezeigten Kraftstoffableitung verbunden ist. Im Inneren des Gehäuses 12 ist der Auslassstutzen 18 mit einem Ablaufraum 20 in einem Innenraum eines Verbindungsstutzens 22 verbunden. Der Verbindungsstutzen 22 erstreckt sich auf der dem Inneren des Gehäuses 12 zugewandten Seite des Deckels 16 koaxial zu einer Filterachse 24. In der normalen Einbaulage unter normalen Betriebsbedingungen der Brennkraftmaschine verläuft die Filterachse 24, wie in der Figur 1 gezeigt, räumlich vertikal, in Richtung einer in den Figuren 1, 3 und 4 angedeuteten Z-Achse. "Axial", "radial", "koaxial" und "umfangsmäßig" beziehen sich im Folgenden, wenn nicht anders angegeben, auf die Filterachse 24.

Radial außerhalb des Verbindungsstutzens 22 weist der Deckel 16 einen Einlassstutzen 26 für den zu reinigenden Kraftstoff auf, der mit einem Zulaufraum 28 im Gehäuse 12 verbunden ist. Außerhalb des Gehäuses 12 ist der Einlassstutzen 26 mit einer in der Figur 1 nicht gezeigten Kraftstoffzuleitung für den Kraftstoff verbunden.

Im Boden des Filtertopfs 14 ist ein Wasserablaufstutzen 30 koaxial zur Filterachse 24 angeordnet. Der Wasserablaufstutzen 30 ist mit einem Wassersammelraum 32 unten im Gehäuse 12 verbunden. Außerhalb des Gehäuses 12 ist der Wasserablaufstutzen 30 mit einer nicht gezeigten Wasserablassleitung verbunden, über die von dem Kraftstoff abgeschiedenes Wasser aus dem Gehäuse 12 abgeleitet werden kann. In dem Wasserablaufstutzen 30 ist ein Wasserablassventil 34 mit einem Wasserstandsensor angeordnet. Im Ruhezustand ist das Wasserablassventil 34 geschlossen, sodass keine Flüssigkeit aus dem Wassersammelraum 32 durch den Wasserablaufstutzen 30 aus dem Gehäuse 12 entweichen kann. Bei Erreichen eines vorgegebenen maximalen Wasserstandes im Wassersammelraum 32 kann das Wasserablassventil 34 manuell oder auch automatisch geöffnet werden, sodass das abgeschiedene Wasser über den Wasserablaufstutzen 30 abgelassen werden kann.

In dem Gehäuse 12 ist ein austauschbares Filterelement 36 angeordnet. Das Filterelement 36 ist als Rundfilterelement ausgestaltet. Das Filterelement 36 trennt den Einlassstutzen 26 dicht von dem Auslassstutzen 18. Das Filterelement 36 umfasst ein sternförmig gefaltetes Filtermedium 38, mit dem insbesondere Partikel aus dem zu reinigenden Kraftstoff heraus filtriert werden. Das Filtermedium 38 hat insgesamt die Form eines koaxialen Kreiszylindermantels. An einer dem Boden des Filtertopfs 14 zugewandten unteren Stirnseite ist das Filtermedium 38 dicht mit einer Abschlussendscheibe 40 verbunden. An seiner gegenüberliegenden, dem Deckel 16 zugewandten oberen Stirnseite ist das Filtermedium 38 dicht mit einer Anschlussendscheibe 42 verbunden. Zwischen der Anschlussendscheibe 42 und der Abschlussendscheibe 40 erstreckt sich in einem Innenraum 45 des Filtermediums 38 koaxial ein skelettartiges, fluiddurchlässiges Mittelrohr 43, welches die beiden Endscheiben 40 und 42 insbesondere stabil miteinander verbindet.

Die Abschlussendscheibe 40 weist eine koaxiale Öffnung 44 auf. Die Öffnung 44 ist von dem Mittelrohr 43 umgeben. Die Öffnung 44 verbindet den Innenraum 45 mit dem Wassersammelraum 32. Auf der dem Boden des Filtertopfs 14 zugewandten Außenseite verfügt die Abschlussendscheibe 40 über mehrere, vorzugweise vier, Stützstege 46, die sich gleichmäßig verteilt entlang eines gedachten koaxialen Kreiszylindermantels erstrecken. Der gedachte Kreiszylindermantel umgibt die Öffnung 44 und den Wasserablaufstutzen 30. Mit den Stützstegen 46 wird das Filterelement 36 gegen den Boden des Filtertopfs 14 abgestützt. Zwischen den Stützstegen 46 befinden sich Verbindungsöffnungen 48, über die sich Wasser im Wassersammelraum 32 auch radial außerhalb der Stützstege 46 verteilen kann.

Die Anschlussendscheibe 42 weist eine koaxiale Öffnung 50 auf. Die Öffnung 50 ist von zwei koaxialen Vorsprüngen umgeben, die sich an der Außenseite der Anschlussendscheibe 42 in axialer Richtung erstrecken. Die beiden Vorsprünge begrenzen eine Aufnahmenut 52 für einen ringartigen Einstecksteg 54 einer Trenneinheit 56 des Filterelements 36.

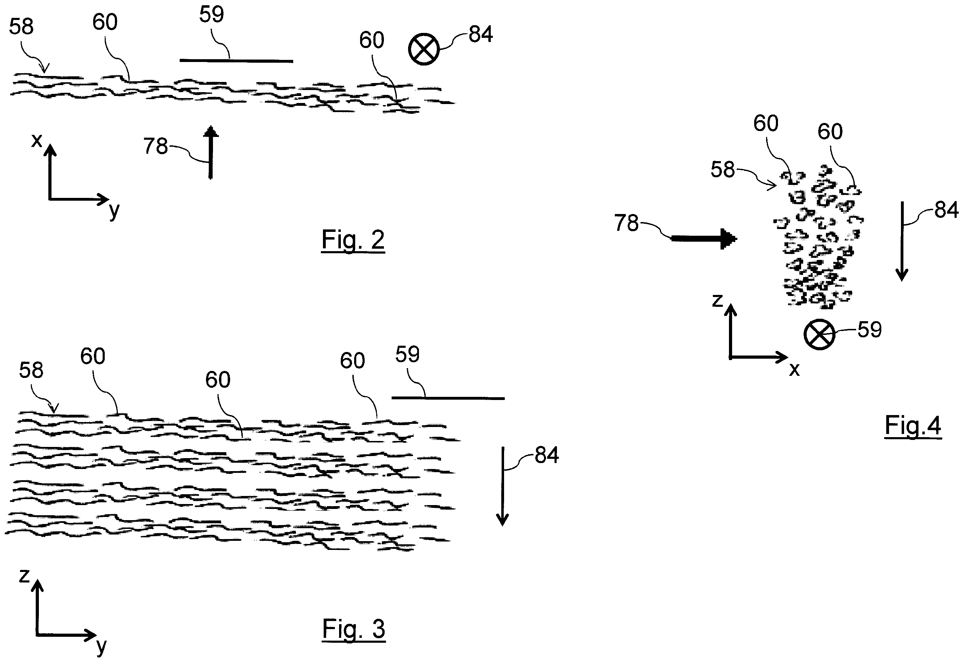

Zwischen der radial inneren Umfangsseite des Filtermediums 38 und dem Mittelrohr 43 befindet sich ein koaxiales Koaleszenzmedium 58. Das Koaleszenzmedium 58 ist ein einlagiges Faservlies. Alternativ kann das Faservlies aber auch mehrlagig ausgebildet sein. Das Koaleszenzmedium 58 ist umfangsmäßig geschlossen und erstreckt sich zwischen der Anschlussendscheibe 42 und der Abschlussendscheibe 40. Das Koaleszenzmedium 58 dient der Zusammenführung auch von kleinsten im Kraftstoff enthaltenen Wassertröpfchen zu größeren Wassertropfen. Die Vlieslage hat eine im Wesentlichen gleichmäßige Faserausrichtung. Eine in den Figuren 2 und 3 angedeuteten Hauptorientierung 59 ist dabei die mittlere Orientierung von dort gezeigten Fasern 60. Die Hauptorientierung 59 von Fasern 60 des Koaleszenzmediums 58 verläuft umfangsmäßig zur Filterachse 24. In der Einbaulage des Filterelements 36 verläuft die Hauptorientierung 59 der Fasern 60 horizontal, in den Figuren 1 bis 4 angedeutet durch eine X-Y-Ebene. Bei der Querschnitts-Darstellung des Koaleszenzmediums 58 in der Figur 4 verläuft die Hauptorientierung 59 senkrecht zur Zeichenebene. Bei einem mehrlagigen Faservlies weist zumindest eine der Vlieslagen, vorzugsweise sämtliche Vlieslagen eine entsprechende Hautorientierung auf.

Die Trenneinheit 56 verfügt über einen Stützkorb 62 mit einem Anschlussabschnitt 64, welcher auch den Einstecksteg 54 aufweist, und ein Trennmedium 66.

Der Anschlussabschnitt 64 ist etwa scheibenförmig mit einer koaxialen Öffnung, in die der Verbindungsstutzen 22 des Deckels 16 hinein ragt. Auf seiner dem Deckel 16 zugewandten Außenseite verfügt der Anschlussabschnitt 64 über einen koaxialen Anschlussstutzen 68. Der Anschlussstutzen 68 ist an seiner freien Stirnseite um 90 Grad radial nach innen gebogen. Auf dem radial inneren Rand des Anschlussstutzens 68 sitzt eine Profilringdichtung 70. In den Anschlussstutzen 68 ist der Verbindungsstutzen 22 so eingesteckt, dass die Verbindung mit der Profilringdichtung 70 abgedichtet ist.

Die Trenneinheit 56 ist mit dem Trennmedium 66 voraus axial durch die Öffnung 50 der Anschlussendscheibe 42 gesteckt. Der Stützkorb 62 und das Trennmedium 66 befinden sich in dem vom Koaleszenzmedium 58 begrenzten Innenraum, also auch im Innenraum 45 des Filtermediums 38.

Das Trennmedium 66 besteht aus einem hydrophoben Siebgewebe. Es hat die Form eines zur Filterachse 24 koaxialen Rohres. Es erstreckt sich von der Anschlussendscheibe 42 bis zur Abschlussendscheibe 40. Das Trennmedium 68 ist umfangsmäßig geschlossen.

Die Umfangswand des Stützkorbs 62 ist gitterartig aufgebaut und flüssigkeitsdurchlässig. Auf seiner der Verbindungsstutzen 22 zugeordneten Stirnseite ist der Stützkorb 62 offen. Die dem Wassersammelraum 32 zugewandte untere Stirnseite des Stützkorbs 62 ist geschlossen. Das Trennmedium 66 liegt an der radial äußeren Umfangsseite des Stützkorbs 62 an.

Zwischen dem Trennmedium 66 und dem Koaleszenzmedium 58 befindet sich im Innenraum 45 ein Ausfällspalt 74. Der Ausfällspalt 74 hat die Form eines Ringraums. Der Ausfällspalt 74 ist radial außen durch das Koaleszenzmedium 58 und radial innen durch das Trennmedium 66 begrenzt.

An der radial äußeren Umfangsseite der Abschlussendscheibe 40 ist außerdem eine Ringdichtung 72 angeordnet, welche sich radial außen gegen die radial innere Umfangsseite des Filtertopfs 14 abstützt. Die Ringdichtung 72 dichtet dem Zulaufraum 28 gegen den Wassersammelraum 32 ab.

Beim Betrieb des Kraftstofffilters 10 wird zu reinigender Kraftstoff aus der Kraftstoffzuleitung angedeutet durch einen Pfeil 76 durch den Einlassstutzen 26 dem Zulaufraum 28 zugeführt.

Der Kraftstoff durchströmt das Filtermedium 38, angedeutet durch Pfeile 78, von dessen Rohseite radial außen zu seiner Reinseite radial innen. Dabei wird der Kraftstoff von Partikeln befreit. Das Filtermedium 38 bildet eine erste Stufe des insgesamt dreistufigen Kraftstofffilters 10 für die Reinigung/Wasserabscheidung.

Auf der Reinseite durchströmt der von Partikeln befreite Kraftstoff das Koaleszenzmedium 58 von radial außen nach innen. Dabei werden im Kraftstoff enthaltene, auch kleinste Wassertröpfen an den Fasern 60 des Vlieses eingefangen und zu größeren Wassertropfen vereinigt. Die Fasern 60 sind im Wesentlichen quer zum Strömungsweg des Kraftstoffs durch das Koaleszenzmedium 58 ausgerichtet. Das Koaleszenzmedium 58 bildet eine zweite Stufe für die Reinigung/Wasserabscheidung. Durch die Orientierung der Fasern 60 quer zur Strömungsrichtung des Kraftstoffs wird die Verweilzeit der Wassertropfen auf den Fasern 60 erhöht. Auf diese Weise erhöht sich die Effizienz der Koaleszenz. Erst wenn die Tropfengröße ausreichend ist, werden die großen Wassertropfen vom durchströmenden Kraftstoff wieder mitgerissen. Durch die horizontale Orientierung der Fasern 60 quer zur Schwerkraft, also quer zu einem Hauptströmungsweg der abgeschiedenen Wassertropfen im Ausfällspalt 74, wird ebenfalls die Verweilzeit der Wassertropfen an den Fasern 60 erhöht.

Der Kraftstoff und die großen Wassertropfen durchströmen die Öffnungen des Mittelrohrs 43 und gelangen in den Ausfällspalt 74.

Der Kraftstoff durchströmt das Trennmedium 66, welches eine dritte Stufe für die Reinigung/Wasserabscheidung bildet, von radial außen nach innen, angedeutet durch Pfeile 80, und gelangt nach oben in den Ablaufraum 20. Der gereinigte und von Wasser befreite Kraftstoff verlässt den Ablaufraum 20 über den Auslassstutzen 18, angedeutet durch Pfeile 82, und wird der Kraftstoffableitung zugeführt.

Die großen Wassertropfen hingegen werden durch das Trennmedium 66 zurückgehalten. Die sinken im Ausfällspalt 74 aufgrund ihres im Vergleich zum Kraftstoff größeren spezifischen Gewichts nach unten, angedeutet durch Pfeile 84, in den Wassersammelraum 32.

Sobald der Wasserstandsensor des Wasserablassventils 34 das Erreichen des vorgegebenen Maximalwasserstands erfasst wird das Wasserablassventil 34 manuell oder automatisch geöffnet. Das Wasser verlässt den Wassersammelraum 32 durch den Wasserablaufstutzen 30.

Zu Wartungszwecken, beispielsweise zum Austausch oder zur Reinigung des Filterelements 36, wird der Deckel 16 in axialer Richtung von dem Filtertopf 14 entfernt. Das Filterelement 36 wird dann in axialer Richtung aus dem Filtertopf 14 heraus gezogen.

Zum Einbau wird das Filterelement 36 mit der Abschlussendscheibe 40 voran in axialer Richtung in den Filtertopf 14 gesteckt. Anschließend wird der Deckel 16 mit dem Verbindungsstutzen 22 voran in axialer Richtung auf die offene Seite des Filtertopfs 14 gesteckt, so dass der Verbindungsstutzen 22 dicht in die Profilringdichtung 70 ragt.

Bei dem oben beschriebenen Ausführungsbeispiel eines Kraftstofffilters 10 und eines Filterelements 36 sind unter anderem folgende Modifikationen möglich:
Die Erfindung ist nicht beschränkt auf einen Kraftstofffilter 10 einer Brennkraftmaschine eines Kraftfahrzeugs. Vielmehr kann sie auch bei andersartigen Brennkraftmaschinen, beispielsweise bei Industriemotoren, eingesetzt werden.

Statt für Dieselkraftstoff kann der Kraftstofffilter 10 auch zur Reinigung/Wasserabscheidung von andersartigen flüssigem Kraftstoff eingesetzt werden. Falls ein Kraftstoff verwendet wird, dessen spezifisches Gewicht größer ist als Wasser, steigen analog die Wassertropfen auf. In diesem Fall kann das Filterelement 36 umgekehrt angeordnet sein. Ebenso können der Kraftstoffeinlass, der Kraftstoffauslass und der Wasserauslass entsprechend angeordnet sein.

Das Filtermedium 38 kann statt sternförmig gefaltet auch als andersartiger Hohlkörper, beispielsweise auch ungefaltet, realisiert sein.

Das Filtermedium 38, das Koaleszenzmedium 58 und/oder das Trennmedium 66 können statt als Hohlzylinder auch in anderer Form, beispielsweise als Hohlkegel, realisiert sein. Sie können statt mit runden Grundflächen auch mit andersartigen, beispielsweise ovalen oder eckigen Grundflächen realisiert sein.

Das Filtermedium 38, das Koaleszenzmedium 58 und/oder das Trennmedium 66 können auch anders als koaxial zueinander oder zur Filterachse 24 angeordnet sein.

Auf die Ringdichtung 72 kann auch verzichtet werden. Bevorzugt kann die Abschlussendscheibe 40 eng an der radial inneren Umfangsseite des Filtertopfs 14 anliegen.

Das Trennmedium 66 kann statt im Innenraum 45 des Filtermediums 38 auch radial außen, das Filtermedium 38 und das Koaleszenzmedium 58 umgebend, angeordnet sein. Der zu reinigende Kraftstoff kann dann das Filtermedium 38 von radial innen nach außen durchströmen. Das Koaleszenzmedium 58 kann sich dann bevorzugt ebenfalls radial außen befinden und das Filtermedium 38 umgeben.

Der zu reinigende Kraftstoff kann statt von oben auch von unten der Rohseite des Filtermediums 38 zugeführt werden. Der Wasserablaufstutzen 30 kann statt zentral auch exzentrisch im Boden des Filtertopfs 14 angeordnet sein.

Anstelle des austauschbaren Filterelements 36 kann auch ein im Gehäuse 12 fest montiertes Filterelement vorgesehen sein.

## Patentansprüche

1. Kraftstofffilter (10) für Kraftstoff, insbesondere Dieselkraftstoff, einer Brennkraftmaschine insbesondere eines Kraftfahrzeugs, mit einem Gehäuse (12), welches wenigstens einen Kraftstoffeinlass (26) für zu reinigenden Kraftstoff, wenigstens einen Kraftstoffauslass (18) für gereinigten Kraftstoff und wenigstens einen Wasserauslass (30) für vom Kraftstoff abgeschiedenes Wasser aufweist und in dem ein Filterelement (36) angeordnet ist, das den Kraftstoffeinlass (26) dicht von dem Kraftstoffauslass (18) trennt und das ein als Hohlkörper ausgestaltetes Filtermedium (38) aufweist, das zur Filtrierung des Kraftstoffs von innen nach außen oder von außen nach innen durchströmbar ist, wobei im Strömungsweg (78) des Kraftstoffs hinter dem Filtermedium (38), dieses umgebend oder in dem von ihm begrenzten Innenraum (45), ein als Hohlkörper gestaltetes Koaleszenzmedium (58) zur Abscheidung von im Kraftstoff enthaltenem Wasser angeordnet ist, das wenigstens eine Lage aus einem zur Koaleszenz von Wasser geeigneten Vlies umfasst, und wobei im Strömungsweg (80) des Kraftstoffs hinter dem Koaleszenzmedium (58), dieses umgebend oder in dem von ihm begrenzten Innenraum, ein als Hohlkörper gestaltetes hydrophobes, kraftstoffdurchlässiges Trennmedium (66) zur Abscheidung von im Kraftstoff enthaltenem Wasser angeordnet ist, derart, dass zwischen dem Koaleszenzmedium (58) und dem Trennmedium (66) ein Ausfällspalt (74) für abgeschiedenes Wasser realisiert ist, der mit dem Wasserauslass (30) des Gehäuses (12) verbunden ist, **dadurch gekennzeichnet, dass** eine Hauptorientierung (59) von Fasern (60) der wenigstens einen Vlieslage quer zu einem Hauptströmungsweg (84) für das abgeschiedene Wasser stromabwärts des Koaleszenzmediums (58) verläuft, wobei die Hauptorientierung (59) der Fasern (60) der wenigstens einen Vlieslage im Wesentlichen quer zu einem Hauptströmungsweg (78) für den Kraftstoff durch das Koaleszenzmedium (58) verläuft.

2. Kraftstofffilter nach Anspruch 1, **dadurch gekennzeichnet, dass** das Filtermedium (38), das Koaleszenzmedium (58) und gegebenenfalls das Trennmedium (66) koaxial angeordnet sind.

3. Kraftstofffilter nach einem der vorigen Ansprüche, **dadurch gekennzeichnet, dass** das Filterelement ein Rundfilterelement (36) ist.

4. Kraftstofffilter nach einem der vorigen Ansprüche, **dadurch gekennzeichnet, dass** das Gehäuse (12) öffenbar ist und das Filterelement (36) austauschbar im Gehäuse (12) angeordnet ist.

5. Filterelement (36) eines Kraftstofffilters (10) für Kraftstoff, insbesondere Dieselkraftstoff, einer Brennkraftmaschine insbesondere eines Kraftfahrzeugs, das in einem Gehäuse (12) des Kraftstofffilters (10) so angeordnet werden kann, dass es einen Kraftstoffeinlass (26) des Gehäuses (12) dicht von einem Kraftstoffauslass (18) trennt, und das ein als Hohlkörper ausgestaltetes Filtermedium (38) aufweist, das zur Filtrierung des Kraftstoffs von innen nach außen oder von außen nach innen durchströmbar ist, wobei im Strömungsweg (78) des Kraftstoffs hinter dem Filtermedium (38), dieses umgebend oder in dem von ihm begrenzten Innenraum (45), ein als Hohlkörper gestaltetes Koaleszenzmedium (58) zur Abscheidung von im Kraftstoff enthaltenem Wasser angeordnet ist, das wenigstens eine Lage aus einem zur Koaleszenz von Wasser geeigneten Vlies umfasst, und eine Hauptorientierung (59) von Fasern (60) der wenigstens einen Vlieslage quer zu einem Hauptströmungsweg (84) für das abzuscheidende Wasser stromabwärts des Koaleszenzmediums (58) verläuft, wobei die Hauptorientierung (59) der Fasern (60) der wenigstens einen Vlieslage im Wesentlichen quer zu einem Hauptströmungsweg (78) für den Kraftstoff durch das Koaleszenzmedium (58) verläuft, und wobei im Strömungsweg (80) des Kraftstoffs hinter dem Koaleszenzmedium (58), dieses umgebend oder in dem von ihm begrenzten Innenraum, ein als Hohlkörper gestaltetes hydrophobes, kraftstoffdurchlässiges Trennmedium (66) zur Abscheidung von im Kraftstoff enthaltenem Wasser angeordnet ist, derart, dass zwischen dem Koaleszenzmedium (58) und dem Trennmedium (66) ein Ausfällspalt (74) für abgeschiedenes Wasser realisiert ist, der mit dem Wasserauslass (30) des Gehäuses (12) verbunden ist.

## Claims

1. Fuel filter (10) for fuel, in particular diesel fuel, of an internal combustion engine in particular of a motor vehicle, with a housing (12), which features at least one fuel inlet (26) for fuel to be cleaned, at least one fuel outlet (18) for cleaned fuel and at least one water outlet (30) for fuel separated from water and in which a filter element (36) is disposed, which separates the fuel inlet (26) tightly from the fuel outlet (18) and which features a filter medium (38) designed as hollow body which can be flowed through from the inside to the outside or from the outside to the inside for filtering the fuel, wherein a coalescence medium (58) designed as hollow body is disposed in the flow path (78) of the fuel behind the filter medium (38), surrounding it or in the interior area (45) defined by it, for separating water contained in the fuel, which comprises at least one layer of a fleece suitable for the coalescence of water, and wherein in the flow path (80) of the fuel behind the coalescence medium (58), surrounding it or in the interior area defined by it, a hydrophobic, fuel-permeable separating medium (66) designed as hollow body for separating water contained in the fuel is disposed in such a way that between the coalescence medium (58) and the separating medium (66) a precipitation gap (74) for separated water is realized which is connected with the water outlet (30) of the housing (12), **characterized in that** a main orientation (59) of fibers (60) of the at least one fleece layer extends transversely to a main flow path (84) for the separated water downstream of the coalescence medium (58), wherein the main orientation (59) of the fibers (60) of the at least one fleece layer extends substantially transversely to a main flow path (78) for the fuel through the coalescence medium (58).

2. Fuel filter according to claim 1, **characterized in that** the filter medium (38), the coalescence medium (58) and, if appropriate, the separating medium (66) are disposed coaxially.

3. Fuel filter according to one of the above claims, **characterized in that** the filter element is a round filter element (36).

4. Fuel filter according to one of the above claims, **characterized in that** the housing (12) is openable and that the filter element (36) is disposed replaceably in the housing (12).

5. Filter element (36) of a fuel filter (10) for fuel, in particular diesel fuel, of an internal combustion engine in particular of a motor vehicle, which can be disposed in a housing (12) of the fuel filter (10) in such a way that it separates a fuel inlet (26) of the housing (12) tightly from a fuel outlet (18) and which features a filter medium (38) designed as hollow body which can be flowed through from the inside to the outside or from the outside to the inside for filtering the fuel, wherein a coalescence medium (58) designed as hollow body is disposed in the flow path (78) of the fuel behind the filter medium (38), surrounding it or in the interior area (45) defined by it, for separating water contained in the fuel, which comprises at least one layer of a fleece suitable for the coalescence of water, and a main orientation (59) of fibers (60) of the at least one fleece layer extends transversely to a main flow path (84) for the water to be separated downstream of the coalescence medium (58), wherein the main orientation (59) of the fibers (60) of the at least one fleece layer extends substantially transversely to a main flow path (78) for the fuel through the coalescence medium (58), and wherein in the flow path (80) of the fuel behind the coalescence medium (58), surrounding it or in the interior area defined by it, a hydrophobic, fuel-permeable separating medium (66) designed as hollow body for separating water contained in the fuel is disposed in such a way that between the coalescence medium (58) and the separating medium (66) a precipitation gap (74) for separated water is realized which is connected with the water outlet (30) of the housing (12).

## Revendications

1. Filtre à carburant (10) pour du carburant, en particulier pour du gazole, d'un moteur à combustion interne en particulier d'un véhicule automobile, avec un boîtier (12) qui présente au moins une entrée de carburant (26) pour le carburant à nettoyer, au moins une sortie de carburant (18) pour le carburant nettoyé et au moins une sortie d'eau (30) pour l'eau séparée du carburant et dans lequel est disposé un élément filtrant (36) qui sépare de manière étanche l'entrée de carburant (26) de la sortie de carburant (18) et qui est pourvu d'un milieu filtrant (38) exécuté sous forme de corps creux qui peut être traversé de l'intérieur vers l'extérieur ou de l'extérieur vers l'intérieur à des fins de filtration du carburant, un milieu de coalescence (58) exécuté en tant que corps creux étant disposé dans le trajet d'écoulement (78) du carburant, derrière le milieu filtrant (38), entourant ce dernier ou dans l'espace intérieur (45) limité par ce dernier, afin de séparer l'eau contenue dans le carburant, ce milieu comprenant au moins une couche d'un non-tissé approprié à la coalescence d'eau, et un milieu de séparation (66) exécuté en tant que corps creux, hydrophobe et perméable au carburant et destiné à séparer l'eau contenue dans le carburant étant disposé dans le trajet d'écoulement (80) du carburant, derrière le milieu de coalescence (58), entourant ce dernier ou dans l'espace intérieur limité par ce dernier, de manière à ce qu'une fente de précipitation (74) soit ménagée pour l'eau séparée entre le milieu de coalescence (58) et le milieu de séparation (66) et reliée à la sortie d'eau (30) du boîtier (12), **caractérisé en ce qu**'une orientation principale (59) de fibres (60) de la couche de non-tissé, au moins au nombre d'une, évolue en travers d'un trajet d'écoulement principal (84) pour l'eau séparée, en aval du milieu de coalescence (58), l'orientation principale (59) des fibres (60) de la couche de non-tissé, au moins au nombre d'une, évoluant essentiellement en travers d'un trajet d'écoulement principal (78) pour le carburant, à travers le milieu de coalescence (58).

2. Filtre à carburant selon la revendication 1, **caractérisé en ce que** le milieu filtrant (38), le milieu de coalescence (58) et, le cas échéant, le milieu de séparation (66) sont disposés de manière coaxiale.

3. Filtre à carburant selon l'une des revendications précédentes, **caractérisé en ce que** l'élément filtrant est un élément filtrant rond (36).

4. Filtre à carburant selon l'une des revendications précédentes, **caractérisé en ce que** le boîtier (12) peut être ouvert et que l'élément filtrant (36) est disposé de manière échangeable dans le boîtier (12).

5. Élément filtrant (36) d'un filtre à carburant (10) pour du carburant, en particulier pour du gazole, d'un moteur à combustion interne en particulier d'un véhicule automobile, pouvant être disposé dans un boîtier (12) du filtre à carburant (10) de sorte qu'il sépare de manière étanche une entrée de carburant (26) du boîtier (12) d'une sortie de carburant (18) et qui est pourvu d'un milieu filtrant (38) exécuté sous forme de corps creux qui peut être traversé de l'intérieur vers l'extérieur ou de l'extérieur vers l'intérieur à des fins de filtration du carburant, un milieu de coalescence (58) exécuté en tant que corps creux étant disposé dans le trajet d'écoulement (78) du carburant, derrière le milieu filtrant (38), entourant ce dernier ou dans l'espace intérieur (45) limité par ce dernier, afin de séparer l'eau contenue dans le carburant, ce milieu comprenant au moins une couche d'un non-tissé approprié à la coalescence d'eau, et une orientation principale (59) de fibres (60) de la couche de non-tissé, au moins au nombre d'une, évoluant en travers d'un trajet d'écoulement principal (84) pour l'eau à séparer, en aval du milieu de coalescence (58), l'orientation principale (59) des fibres (60) de la couche de non-tissé, au moins au nombre d'une, évoluant essentiellement en travers d'un trajet d'écoulement principal (78) pour le carburant, à travers le milieu de coalescence (58), et un milieu de séparation (66) exécuté en tant que corps creux, hydrophobe et perméable au carburant et destiné à séparer l'eau contenue dans le carburant étant disposé dans le trajet d'écoulement (80) du carburant, derrière le milieu de coalescence (58), entourant ce dernier ou dans l'espace intérieur limité par ce dernier, de manière à ce qu'une fente de précipitation (74) soit ménagée pour l'eau séparée entre le milieu de coalescence (58) et le milieu de séparation (66) et reliée à la sortie d'eau (30) du boîtier (12).
